(19) Europäisches Patentamt
European Patent Office
Office européen des brevets

(11) EP 2 802 147 A2

(12) EUROPEAN PATENT APPLICATION

(43) Date of publication:
12.11.2014 Bulletin 2014/46

(51) Int Cl.:
H04N 9/31 (2006.01)    G06F 3/01 (2006.01)

(21) Application number: 13192444.1

(22) Date of filing: 12.11.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 09.05.2013 JP 2013099748

(71) Applicant: Kabushiki Kaisha Toshiba
Tokyo 105-8001 (JP)

(72) Inventors:
• Suzuki, Takahiro
  Tokyo, 105-8001 (JP)
• Haruki, Kosuke
  Tokyo, 105-8001 (JP)

(74) Representative: Henkel, Breuer & Partner
Patentanwälte
Maximiliansplatz 21
80333 München (DE)

(54) **Electronic apparatus, information processing method, and storage medium**

(57) According to one embodiment, an electronic apparatus (101) is connectable to a projector (201) that projects projection information onto a projection surface to create a projection image and a camera (301) that captures the projection image. The electronic apparatus (101) includes an object detector (127) and a processor (113). The object detector (127) is configured to detect an object between the projector and the projection surface based on the projection information and captured information from the camera. The processor (113) is configured to perform an object emphasis processing for at least one of the projection information and the captured information.

FIG. 2

**Description**

Embodiments described herein relate generally to an electronic apparatus such as an information processing device, an information processing method, and a storage medium.

A projector that projects information generated by an electronic apparatus such as an information processing apparatus is widely used.

A method for pointing an arbitrary point in a projected image such as a document, image, or photograph projected to a screen by a projector includes a method for directly pointing the point by a pointer and a method for adding an image information such as a cursor image to a projection data supplied to a projector by an electronic device.

The method using a pointer needs the pointer device. The method for displaying a cursor image requires an operation for moving the cursor image.

A general architecture that implements the various features of the embodiments will now be described with reference to the drawings. The drawings and the associated descriptions are provided to illustrate the embodiments and not to limit the scope of the invention.

FIG. 1 is a diagram illustrating an exemplary configuration of a projection system according to an embodiment.

FIG. 2 is a block diagram illustrating an exemplary configuration of an electronic apparatus 101 according to an embodiment.

FIG. 3 is a flowchart illustrating an exemplary processing flow of the electronic apparatus 101 according to an embodiment.

FIGS. 4A and 4B are diagrams illustrating an exemplary calibration image.

FIG. 5 is a flowchart illustrating an example of position correction according to an embodiment.

FIG. 6 is a flowchart illustrating an example of color correction according to an embodiment.

FIG. 7 is a flowchart illustrating an example of automatic exposure control according to an embodiment.

FIG. 8 is a diagram illustrating an example of binary search used in automatic exposure control according to an embodiment.

FIG. 9 is a flowchart illustrating an example of automatic white balance control according to an embodiment.

FIG. 10 is a diagram illustrating an example of binary search used in automatic white balance control according to an embodiment.

FIGS. 11A, 11B, 11C, 11D, and 11E are diagrams illustrating an example of automatic distortion correction according to an embodiment.

FIG. 12 is a diagram illustrating an example of ambient color correction according to an embodiment.

FIGS. 13A and 13B are diagrams illustrating a color correction direction according to an embodiment.

FIGS. 14A, 14B, 14C, and 14D are diagrams illustrating an example of local adaptive luminance addition according to an embodiment.

FIGS. 15A, 15B, 15C, and 15D are diagrams illustrating an exemplary fringe operation improvement processing according to an embodiment.

FIGS. 16A and 16B are diagrams illustrating an exemplary scroll mode according to an embodiment.

FIGS. 17A and 17B are diagrams illustrating an exemplary zoom mode according to an embodiment.

FIG. 18 is a diagram illustrating an exemplary drawing shaping processing.

FIGS. 19A, 19B, and 19C are diagrams illustrating an example of finger shape detection according to an embodiment.

FIGS. 20A, 20B, and 20C are diagrams illustrating an example of finger direction detection according to an embodiment.

FIGS. 21A and 21B are diagrams illustrating an example of grasping object recognition according to an embodiment.

FIGS. 22A and 22B are diagrams illustrating an example of operation allocation depending on a hand distance change according to an embodiment.

FIGS. 23A and 23B are diagrams illustrating an example of operation allocation depending on a fingertip locus according to an embodiment.

FIG. 24 is a diagram illustrating an example of operation allocation depending on a fingertip movement according to an embodiment.

FIG. 25 is a diagram illustrating an example of operation allocation according to an embodiment.

FIGS. 26A, 26B, and 26C are diagrams illustrating an example of screen touch detection based on shadow elimination according to an embodiment.

FIGS. 27A, 27B, and 27C are diagrams illustrating an example of screen touch detection based on a screen vibration according to an embodiment.

FIGS. 28A, 28B, and 28C are diagrams illustrating an example of screen touch detection based on a sound according to an embodiment.

FIGS. 29A and 29B are diagrams illustrating an example of screen touch detection using a remote controller according to an embodiment.

FIGS. 30A and 30B are diagrams illustrating an example of operation position conversion according to an embodiment.

FIG. 31 is a diagram illustrating an example of laser pointer detection according to an embodiment.

FIG. 32 is a diagram illustrating an example of a transparent pointing bar used in an embodiment.

FIG. 33 is a diagram illustrating an example of hand shadow detection of a plurality of users according to an embodiment.

FIGS. 34A, 34B, 34C, and 34D are diagrams illustrating an exemplary image processing when a whiteboard is used according to an embodiment.

FIG. 35 is a diagram illustrating an exemplary re-calibration start condition according to an embodiment.

FIG. 36 is a flowchart illustrating an example of re-calibration according to an embodiment.

FIG. 37 is a flowchart illustrating another example of re-calibration according to an embodiment.

FIG. 38 is a diagram illustrating an exemplary fingertip tracking processing according to an embodiment.

FIG. 39 is a diagram illustrating an example of screen display according to an embodiment.

FIGS. 40A and 40B are diagrams illustrating an exemplary click specifying processing according to an embodiment.

Various embodiments will be described hereinafter with reference to the accompanying drawings.

In general, according to one embodiment, an electronic apparatus is connectable to a projector that projects projection information onto a projection surface to create a projection image and a camera that captures the projection image. The electronic apparatus includes an object detector and a processor. The object detector is configured to detect an object between the projector and the projection surface based on the projection information and captured information from the camera. The processor is configured to perform an object emphasis processing for at least one of the projection information and the captured information.

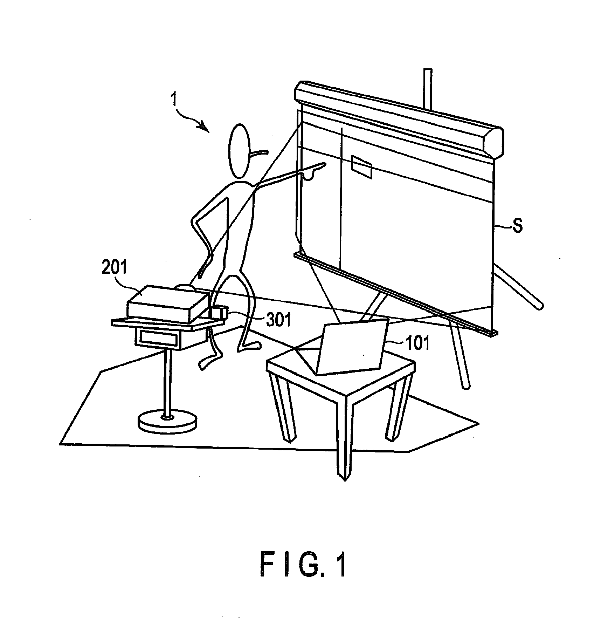

FIG. 1 illustrates an exemplary projection system (information processing system) using an electronic apparatus (information processing apparatus) according to an embodiment. Elements, configurations, or functionalities described below may be implemented using hardware. Alternatively, they may be implemented using software based on a microcomputer (such as a central processing unit (CPU) or a processing device).

A projection system 1 includes an electronic apparatus 101, that is, an information processing device such as a personal computer (PC), a projector 201, and a camera 301. The projector 201 projects a projection image corresponding to projection information as a signal output from the electronic apparatus 101 onto a white projection surface S such as a screen. The camera 301 captures the projection image projected onto the screen S by the projector 201. The projection surface S may include other materials such as a whiteboard without limiting to the screen. A user, an announcer, or a presenter (hereinafter, referred to as a user) may be located in a predetermined position, including either the left or the right side, with respect to the screen S. A user is not necessarily located in a position where a display screen (projected information) of the electronic apparatus 101 of a personal computer (PC) or the like is viewed. Windows of a plurality of applications may be overlapped on the display screen of the electronic apparatus 101. The camera 301 may be integrated with, for example, the electronic apparatus 101.

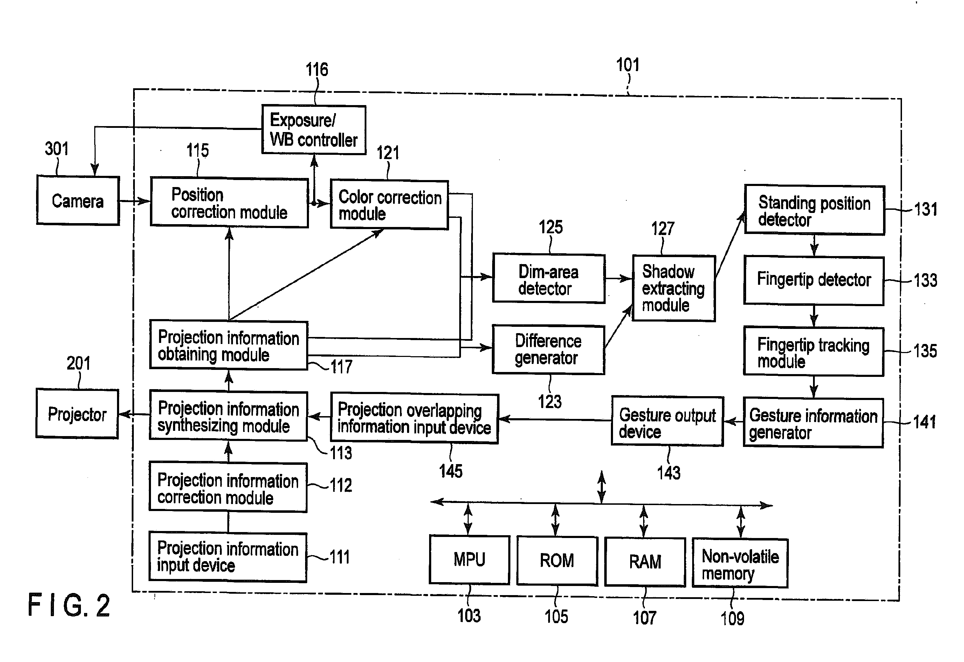

FIG. 2 illustrates an example of a schematic configuration of the electronic apparatus 101 such as a personal computer (PC) included in the projection system 1 of FIG. 1. Although a notebook type PC is illustrated as the electronic apparatus 101 in FIG. 1, a desktop type PC may also be used. The electronic apparatus 101 includes a projection information input device 111 such as an application program or image processing software for generating projection information. The projection information from the projection information input device 111 is input to the projection information synthesizing module 113 through a projection information correction module 112. An output from a projection overlapping information input device 145 is also input to the projection information synthesizing module 113. The output information from the projection information synthesizing module 113 is supplied to the projector 201, and an image corresponding to the projection information is projected onto the screen S.

Image information (camera image) output from the camera 301 that captures the image projected onto the screen S is supplied to a position correction module 115. A projection information obtaining module (screen capturing module) 117 is also connected to the projection information synthesizing module 113, so that the projection information (such as an original image and a captured image) corresponding to the image projected by the projector 201 is obtained from synthesis information.

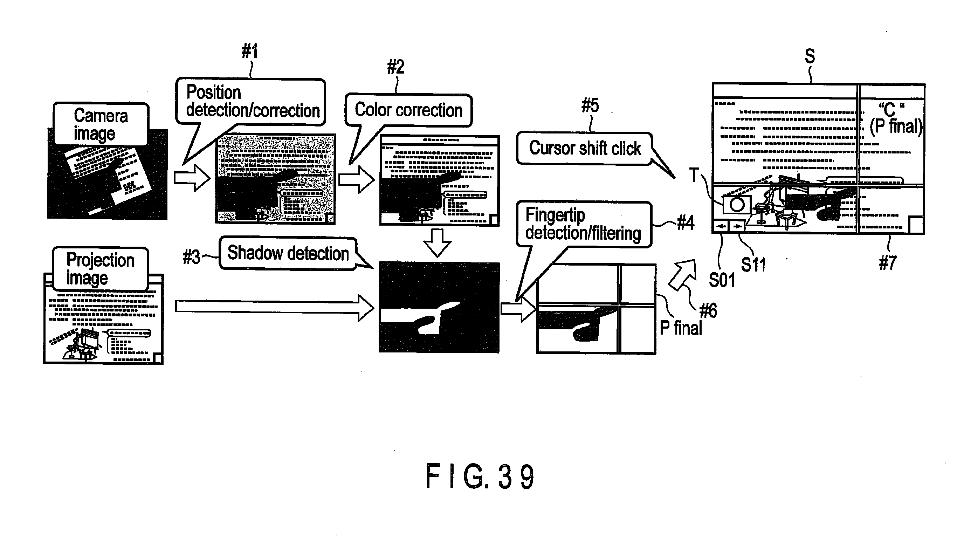

The projection information output from a projection information obtaining module 117 is also input to the position correction module 115. A position correction module 115 performs computation for identifying what kind of perspective transformation is to be performed for the camera image in order to match the original image. For example, local features such as speeded up robust features (SURF) are extracted from both the original image and the camera image, and cross-matching is performed for the extracted local features, so that a $3 \times 3$ homography matrix is estimated, for example, using a random sample consensus (RANSAC). That is, the image output from the position correction module 115 is a camera image (hereinafter, referred to as a perspective transformation image) obtained by performing perspective transformation using the homography matrix (block #1 of FIG. 39).

The output of the position correction module 115 is supplied to a color correction module 121 and an exposure/white-balance controller 116. The output of the exposure/white-balance controller 116 is supplied to the camera 301 to control the camera 301. The output of the color correction module 121 is supplied to a dim-area detector 125 and a difference generator 123. The projection information output from the projection information obtaining module 117 is also input to the color correction module 121, the dim-area detector 125, and the difference generator 123.

The color correction module 121 corrects a color (or luminance) of the perspective transformation image to match that of the original image. For example, for each color (luminance) of overall pixels, if a color (luminance) of a pixel in a position (x, y) on a perspective transformation image has a value $I_i$ (where a range of the value $I_i$ is set to, for example, [0, ..., 255]), and a color (or luminance) of a pixel in a position (x, y) of the original image has a value $I_j$ (where a range of the value $I_j$ is set to, for example, [0, ..., 255]), an average $m(I_j)$ for the values $I_j$ on the original image corresponding to overall points (x, y) having a certain value $I_i$ in a perspective transformation image is calculated, and a function $f(I_i)$ that returns a color (or luminance) obtained by correcting the color $I_i$ is established. If the number of values $I_j$ is smaller than that of the values $I_i$, interpolation may be performed using the values $f(I_i)$ for neighboring positions.

An image output from the color correction module 121 (hereinafter, referred to as a corrected image) is obtained by applying a function f for overall pixels of the perspective transformation image.

As a result, it is possible to cancel an influence of tint included in the camera image and the original image having a substantially white background. In many cases, the tint is resulted from the tint components of the background (slightly colored in an originally white image) generated in the projection image (block #2 in FIG. 39).

The difference generator 123 calculates a difference image "$I_{diff}(x, y) = |I_c(x, y) - I_o(x, y)|$" using a corrected image $I_c(x, y)$ output from the color correction module 121 and the projection image (original image or captured image) $I_o(x, y)$ output from the projection information obtaining module 117. The dim-area detector 125 calculates a dim image "$I_{dim}(x, y) = \text{threshold}(I_c(x, y))$" from the corrected image $I_c(x, y)$ output from the color correction module 121.

The outputs of the dim-area detector 125 and the difference generator 123 are supplied to a shadow extracting module 127. The shadow extracting module 127 calculates a shadow image "$I_{shadow}(x, y) = \text{threshold}(I_{diff}(x, y) * I_{dim}(x, y))$" from the output $I_{diff}(x, y)$ of the difference generator 123 and the output $I_{dim}(x, y)$ of the dim-area detector 125. In addition, the functions of the dim-area detector 125 and the shadow extracting module 127 have different threshold values. A function "threshold (I, pred)" is a function that generates an image having a value "1" if a binarization condition pred (for example, a pixel value I is equal to or smaller than 50) is satisfied in a pixel (x, y). Otherwise, the function "threshold (I, pred)" generates a value "0".

In such a processing, an object placed between the screen S and the projector 201 and a shadow thereof are detected as a value $I_{diff}$, and a dark area including the shadow is detected as a value $I_{dim}$, so that a product between the values $I_{diff}$ and $I_{dim}$ is used to extract a shadow (to detect a shadow) (block #3 in FIG. 39).

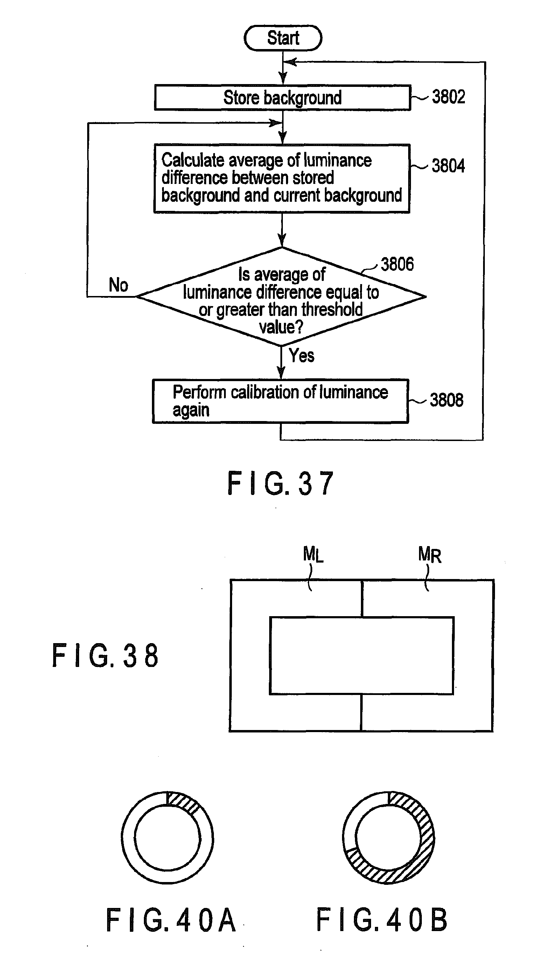

The output of the shadow extracting module 127 is supplied to the standing position detector 131. The standing position detector 131 is used to determine which of the left or right side a user stands in with respect to the screen S. As illustrated in FIG. 38, the standing position detector 131 obtains sums $P_L$ and $P_R$ of pixel values in left and right marginal areas $M_L$ and $M_R$ and compares them. If $P_L < P_R$, the shadow more occupies the right side. Therefore, if $P_L < P_R$, it can be determined that a user stands in the right side. Otherwise, it can be determined that a user stands in the left side.

The output of the standing position detector 131 is supplied to a fingertip detector 133. The fingertip detector 133 detects a fingertip of a user. The fingertip detector 133 calculates a fingertip position $Pf(x, y)$ having a maximum value x satisfying the condition "$I_{shadow}(x, y) > 0$" in a case where a user stands in the left side. In addition, the fingertip detector 133 calculates a ratio of the pixels satisfying the condition "$I_{shadow}(x, y) > 0$" within a pixel range neighbor to the pixel $Pf(x, y)$. In a case where this ratio is smaller than a threshold value, it means that the pixel $Pf(x, y)$ is included in a thin image. As a result, the pixel $Pf(x, y)$ can be detected as a fingertip.

The output of the fingertip detector 133 is supplied to a fingertip tracking module 135. The fingertip tracking module 135 outputs a final fingertip position using the past fingertip position information of a user. The fingertip tracking module 135 appropriately performs filtering with the past fingertip position information being added in order to remove a noise and outputs a final fingertip position $P_{final}(x, y)$. For example, the final fingertip position $P_{final}(x, y)$ is obtained through filtering for removing a noise using a Kalman filter in which state variables (x, x', y, and y') are used (block #4 in FIG. 39).

The output of the fingertip tracking module 135 is supplied to a gesture information generator 141. The gesture information generator 141 detects that the final fingertip position indicates substantially the same position for a certain time. The gesture information generator 141 moves the cursor to the final fingertip position $P_{final}(x, y)$ (block #5 in FIG. 39). For example, the gesture information generator 141 creates gesture information depending on a rule. For example, if the final fingertip position $P_{final}(x, y)$ stays in a narrow range for a certain time, such a case may be considered as a "click." The final fingertip position $P_{final}(x, y)$ as a "cursor position," "click information," "information on time taken until a gesture is considered as a click," and the like are transmitted to the projection overlapping information input device 145 as necessary (block #6 in FIG. 39).

A gesture output device 143 performs an operation on an actual apparatus.

The information transmitted to projection overlapping information input device 145 is synthesized with the original image through an overlay and the like using the projection information synthesizing module 113 and is transmitted to the projector 201 as the projection information in the next frame. In this case, as illustrated in FIG. 39, on the screen S, there are displayed a specific image such as a cursor $C(P_{final})$ indicated at an intersection point between a pair of lines intersecting at a predetermined position a "Previous" button S01 for instructing input of a control command for displaying a previous page in response to a "click," a "Next" button S11 for instructing input of a control command for displaying a next page in response to a "click," a time indication T (block #7 in FIG. 39). The indication T explicitly displays, as illustrated in FIGS. 40A and 40B, time elapsing until the position $P_{final}$ (intersection point between a pair of lines) is designated as a "cursor position" or "click information" (time during which a fingertip shadow position is to rest without a movement), for example, using a method in which a cycle of circle is set as a fixed time, and an area corresponding to an elapsing time is displayed in a different color or brightness from that of the remaining time, and the like (block #7 in FIG. 39).

The electronic apparatus 101 includes a control module (MPU) 103 that controls each elements described above, a ROM 105 that stores a program used in operation of the MPU 103, a RAM 107 serving as a work area in an actual processing, a non-volatile memory 109 that stores numerical data or applications, and the like.

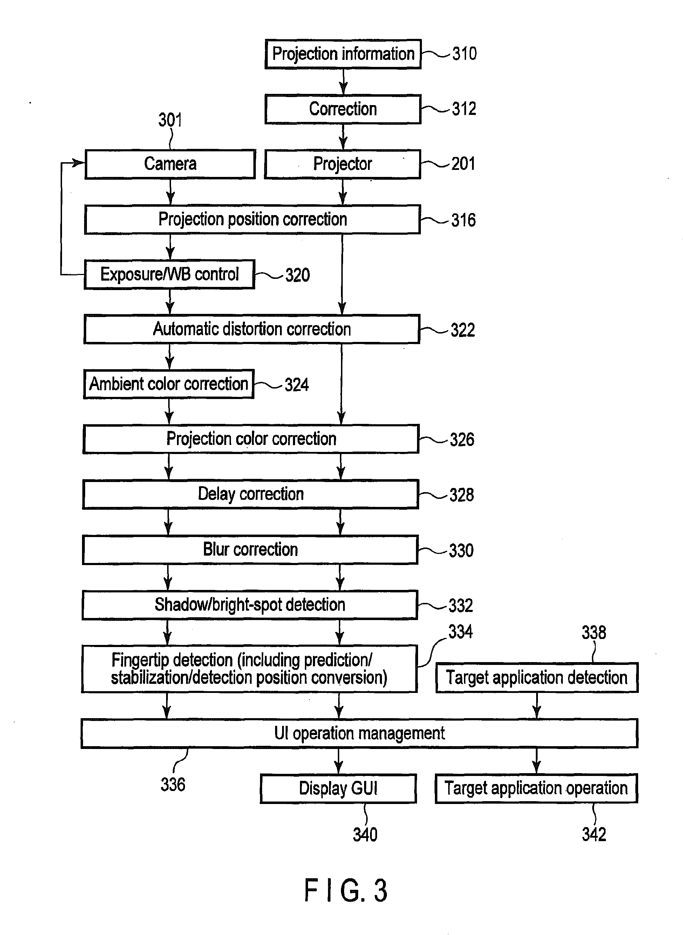

FIG. 3 illustrates a processing flow of captured information obtained using the camera 301 and projection information supplied to the projector 201 according to an embodiment. The projection information 310 is corrected in block 312 and is supplied to the projector 201. In block 316, projection position correction is performed based on the projection information supplied to the projector 314 and the captured information from the camera 301. Exposure/WB control is performed for the captured information subjected to the projection position correction in block 320. A result of the exposure/WB control is supplied to the camera 301.

Automatic distortion correction is performed in block 322 based on the projection information and the captured information subjected to the projection position correction. Ambient color correction is performed in block 324 based on the captured information subjected to the automatic distortion correction. Projection color correction is performed in block 326 based on the captured information subjected to the ambient color correction and the projection information subjected to the automatic distortion correction. Delay correction is performed in block 328 based on the projection information and the captured information subjected to the projection color correction. Blur correction is performed in block 330 based on the projection information and the captured information subjected to the delay correction. Shadow/bright-spot correction is performed in block 332 based on the projection information and the captured information after the blur correction. Fingertip detection (including prediction/stabilized shadow detection/detection position conversion) is performed in block 334 based on the projection information and the captured information subjected to the shadow/bright-spot correction. User interface (UI) operation management is performed in block 336 based on the projection information and the captured information subjected to the fingertip detection and a result of the target application detection performed in block 338. Based on the result of the UI operation management, a graphic user interface (GUI) is displayed in block 340, and target application operation is performed in block 342.

Hereinafter, a specific example of each processing of FIG. 3 will be described.

<1. Environment>

In some cases, the operation of the projection system may not be stabilized, and time may be consumed for preparation depending on a user's environment. Description will now be made for a processing for improving such cases.

<1-1. Projection Position Correction>

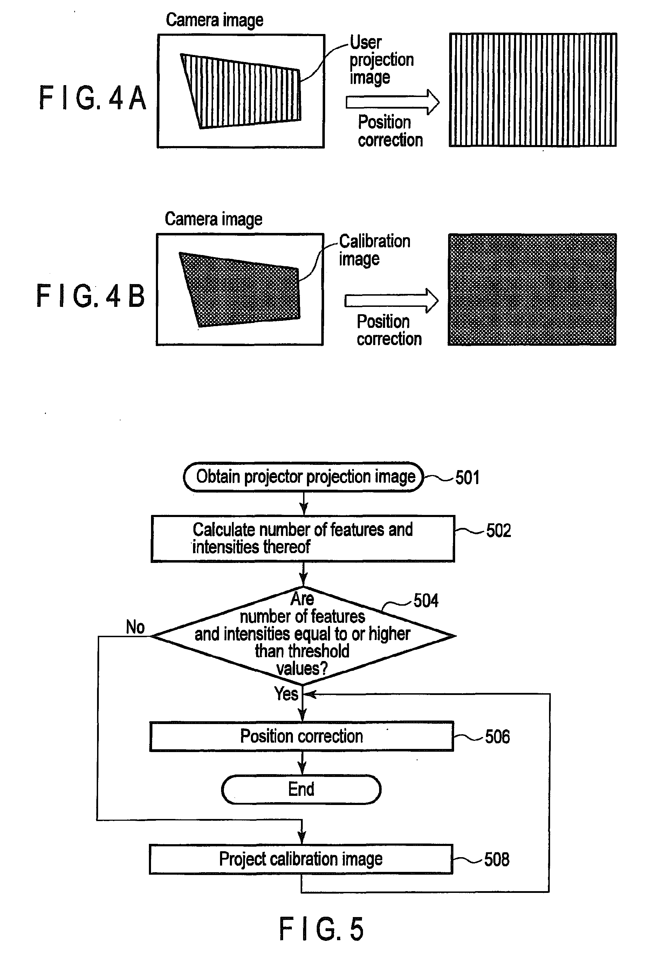

This is a processing regarding the position correction module 115 of FIG. 2 and block 316 of FIG. 3. In a case where the projection content is too simple as illustrated in FIG. 4A, the projection position correction may be failed if a user performs the projection position correction by directly using the content to be projected by the projector 201. Such a failure of the projection position correction may be prevented by using a camera image obtained by projecting a complicated pattern or photograph (calibration image) suitable for the projection position correction using the projector 201 and capturing the projection image using the camera 301 as illustrated in FIG. 4B.

It is possible to suppress display of an unnatural screen if it is determined whether or not the image projected by a user using the projector 201 has a property suitable for the projection position correction, and a calibration image suitable for correction is projected in the projection system side only when the image does not have a suitable property.

FIG. 5 is a flowchart illustrating an example of projection position correction. In block 501, the projection information obtaining module 117 obtains a projection currently projected by the projector 201. In block 502, the number of local features (such as a SURF) and the strength thereof necessary for the projection position correction included in the projection image are calculated. In block 504, it is determined whether or note the number of points and the intensities thereof are equal to or greater than threshold values. For example, it is determined that the local feature amount is sufficient if the number of local features existing in each of four quadrants of the screen with a strength equal to or higher than a predetermined threshold value is equal to or greater than a predetermined threshold value. If there are a sufficient number of local features, the projection position correction is performed in block 506 based on the projection image and the camera image. In a case where there is no sufficient amount of local features, the projection position correction is performed in block 508 by projecting not the projection content of a user, but the calibration image obtained in advance by assuming that a system has a sufficient amount of local features.

<1-2. Projection Color Correction>

This is a processing regarding the color correction module 121 of FIG. 2 and block 326 of FIG. 3. In a case where a color diversity of the projection content is insufficient as illustrated in FIG. 4A, the projection color correction may be failed if the content to be projected by a user using the projector 201 is directly used to perform the projection color correction. It is possible to prevent a failure of the projection color correction by using a camera image obtained by projecting a complicated pattern or photograph (calibration image) suitable for the projection color correction using the projector 201 as illustrated in FIG. 4B and capturing this projection image using the camera 301.

It is possible to suppress display of an unnatural screen if it is determined whether or not the content projected by a user using the projector 201 has a property suitable for the projection color correction, and the calibration image suitable for correction is projected in the projection system side only when the content does not have the suitable property.

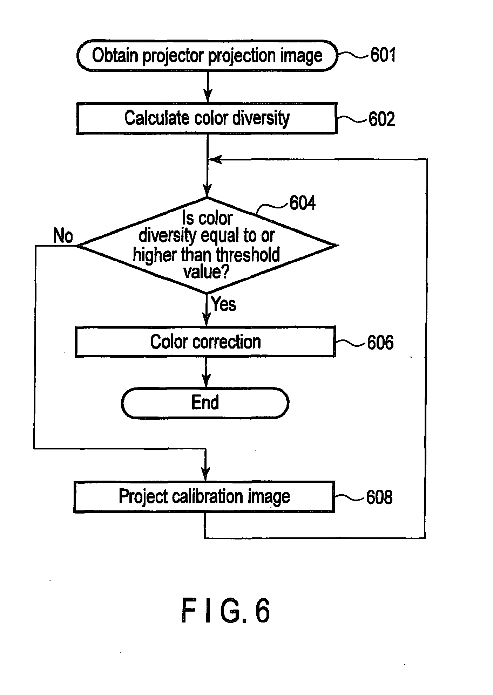

FIG. 6 is a flowchart illustrating an example of projection color correction. In block 601, the projection information obtaining module 117 obtains the projection image currently projected using the projector 201. In block 602, a color diversity necessary for projection color correction included in the projection image is calculated. In block 604, it is determined whether or not the color diversity is equal to or higher than a threshold value. For example, it is determined that the color diversity is sufficient if a 3-dimensional histogram having eight bins equally divided in each dimension is created from each pixel of the projection content using an RGB system or any other color systems, and a variance of hits of the bins is equal to or lower than a predetermined threshold value. If the color diversity is sufficient, projection color correction is performed in block 606 based on the projection image and the camera image. If the color diversity is not sufficient, in block 608, the projection color correction is performed by projecting not the projection content of a user, but the calibration image obtained in advance by assuming that a system has a sufficient color diversity.

<1-3. Automatic Exposure Control>

This is a processing relating to the exposure/WB controller 116 of FIG. 2 and block 320 of FIG. 3. In this system, an arbitrary position on the projection image such as a document, an image, or a photograph projected on the screen S using the projector 201 is indicated by including a shadow of a user's finger or hand (hereinafter, collectively referred to as a finger) on the projection image or capturing a finger itself on the camera image and detecting a fingertip based on a difference between the image information projected using the projector 201 and the camera image captured by the camera 301. For this reason, if exposure of the camera 301 is adaptively controlled in a high speed such that a shadow of a finger is appropriately viewed on the camera image, that is, in an over-exposure manner considering the entire screen, it is possible to detect a finger even when the brightness of the projector 201 is low.

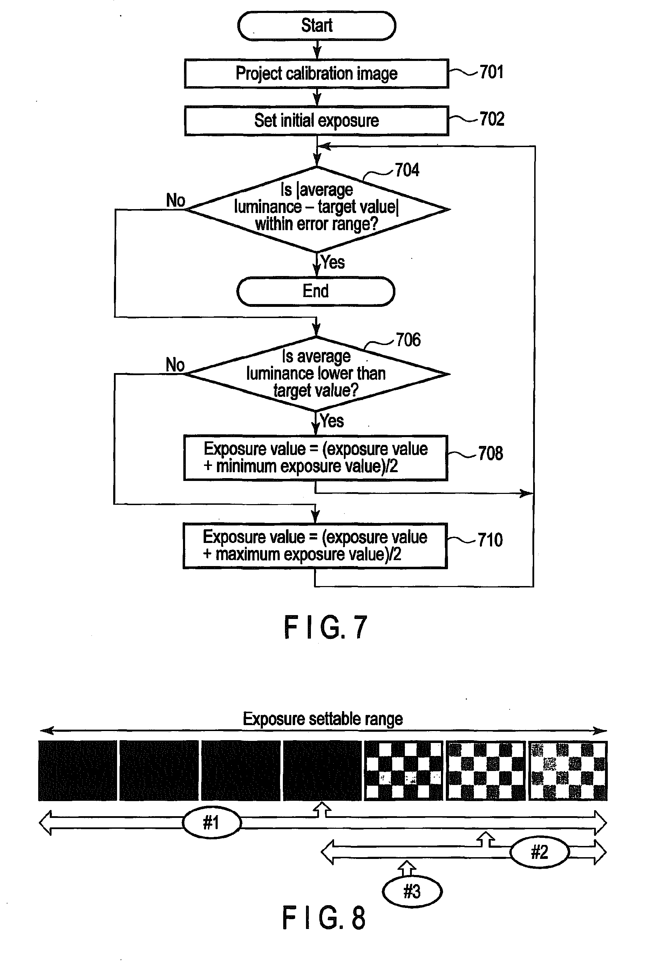

FIG. 7 is a flowchart illustrating an example of automatic exposure control. In block 701, a calibration image is projected. In block 702, a representative luminance value m (for example, an average luminance value is used) of the content currently projected by the projector 201 or the projection content (calibration image) prepared by the projection system as described above in the chapter <A-2. Projection Color Correction> is calculated, and initial exposure is set based on the calculated representative luminance value m. In block 704, a representative luminance value (average luminance value) s of the image obtained after the exposure of the camera 301 is set to a certain value is calculated, and it is determined whether an absolute value of the difference between the average luminance value s and the target luminance value t determined from the average luminance value m is smaller than a threshold value $\theta$. The target luminance value t is set to be larger than the average luminance value m in order to obtain more information on a dark portion of the shadow. As described below, in a case where a bright spot of a laser pointer is detected, the target luminance value t is set to be smaller than the average luminance value m in order to obtain more information on the bright portion. In a case where an absolute value of the difference between the target luminance value t and the average luminance value s is smaller than the threshold value $\theta$, an error is within an allowable range, and the exposure control is terminated.

In a case where the absolute value of the difference is greater than the threshold value $\theta$, a target exposure value is obtained efficiently through a binary search. For this reason, in block 706, it is determined whether or not the average luminance value s is smaller than the target luminance value t. In a case where the average luminance value s is smaller than the target luminance value t, in block 708, the exposure is set to an intermediate point between the minimum settable value and the current value, and the processing from the determination of block 704 is repeated.

In a case where the average luminance value s is equal to or greater than the target luminance value t, in block 710, the exposure is set to an intermediate point between the maximum settable value and the current value, and the processing from block 704 is repeated.

As a result, it is possible to cause the average luminance value s to match the target luminance value t (within an error range $\theta$) for a short time. FIG. 8 is a diagram illustrating automatic control of the exposure value through a binary search.

<1-4. Automatic WB Control>

This is a processing regarding the exposure/WB controller 116 of FIG. 2 and block 320 of FIG. 3. It is possible to use the projector 201 in a wider range of environment or a light source of a projector by controlling a white balance (WB) of the camera 301 such that light-receiving elements of each color R, G, and B of the camera 301 uniformly increase or decrease a photographic signal when the brightness of the projection content of the projector 201 is changed.

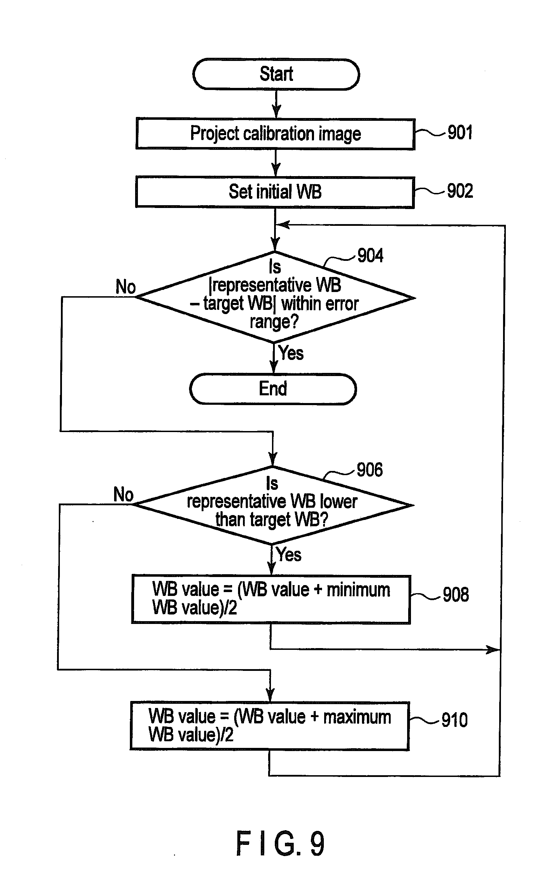

FIG. 9 is a flowchart illustrating an example of automatic WB control. Similar to the chapter <1-3. Automatic Exposure Control>, the calibration image is projected in block 901, and the representative white balance value m (for example, m = Sr - Sb, where Sr denotes a sum of red colors in the screen, and Sb denotes a sum of blue colors) is calculated in block 902, so that the initial WB value is set based on the representative white balance value m.

In block 904, a representative WB value s of the image obtained after the WB value of the camera 301 is set to a certain value is calculated, and it is determined whether or not an absolute value of the difference between the representative WB value s and the target WB value t determined from the representative WB value m is smaller than the threshold value $\theta$. In a case where the absolute value of the difference between the target WB value t and the representative WB value s is smaller than the threshold value $\theta$, it is determined that an error is within an allowable range, and exposure control is terminated.

In a case where the absolute value of the difference is larger than the threshold value $\theta$, a target WB value is obtained efficiently through a binary search. For this reason, in block 906, it is determined whether or not the representative WB value s is smaller than the target WB value t.

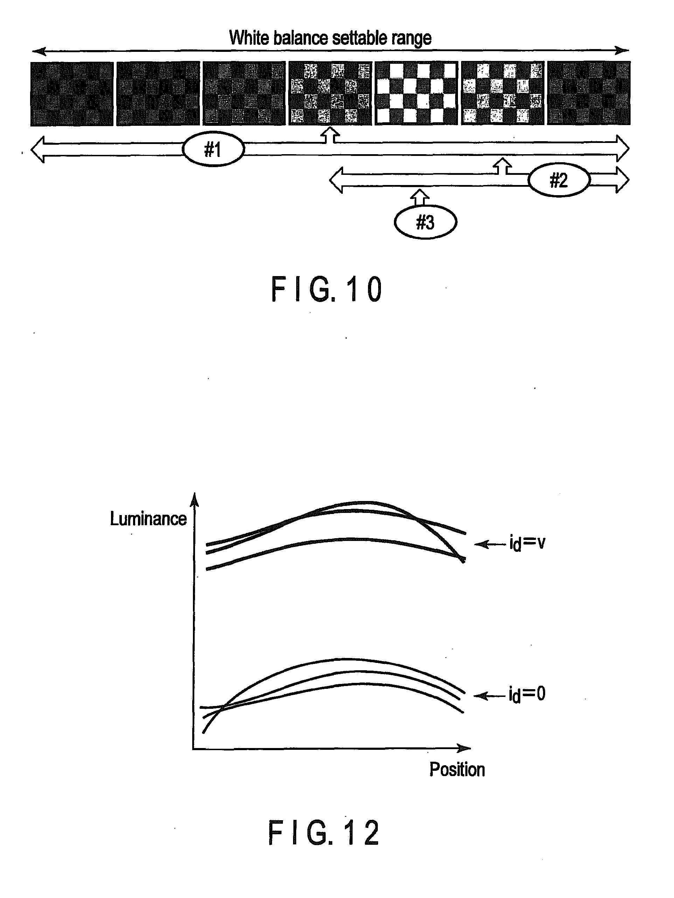

In a case where the representative WB value s is smaller than the target WB value t, in block 908, the WB value is set to an intermediate point between the minimum settable value and the current value, and the processing from determination of block 904 is repeated. In a case where the representative WB value s is equal to or greater than the target WB value t, in block 910, the WB value is set to an intermediate point between the maximum settable value and the current value, and the processing from determination of block 904 is repeated. As a result, it is possible to match the representative WB value s and the target WB value t (within an error range $\theta$) for a short time. FIG. 10 is a diagram illustrating automatic control of the WB value through a binary search.

<1-5. Automatic Distortion Correction>

This is a processing regarding the color correction module 121 of FIG. 2 and block 322 of FIG. 3. On the projection surface having a low flatness, the camera 301 may not accurately capture the projection content and may not accurately detect a finger even by simply comparing the projection image and the camera image. For this reason, if a distortion on the projection surface (screen) is actively measured by projecting a grid pattern or the like at the time of calibration, a correction value is stored, and correction is performed using the correction value at each time of actual projection, projection can be accurately performed even in a distortion screen having a low flatness.

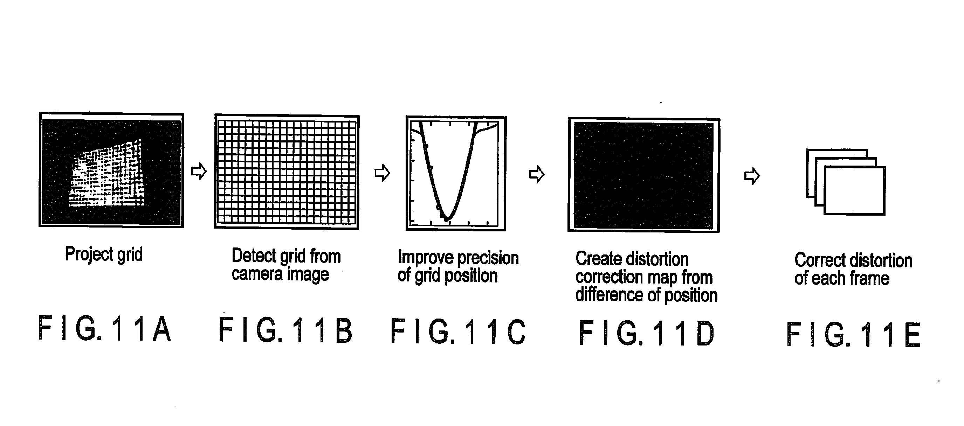

FIGS. 11A to 11E are diagrams illustrating a scheme of automatic distortion correction. The grid or the check pattern illustrated in FIG. 11A is projected at the time of calibration. A pixel array between rows and columns of the grid of the camera image is obtained after position correction. A grid position is enumerated based on the local minimum value of the luminance value of the pixel array as illustrated in FIG. 11B. Using n pixels neighbor to the local minimum value, n sets (x, i), where x denotes a pixel position, and i denotes a pixel value, are suited to a quadratic function through a least-squares method as illustrated in FIG. 11C, and a grid position is updated in an axial position of the quadratic function. A movement vector (vx, vy) (difference of position) to the pixel of the projection image from the camera pixel (cx, cy) is calculated based on the change of the grid position before and after the projection. A distortion correction map is created as illustrated in FIG. 11D by arranging movement vectors of each pixel in each pixel position. Then, it is possible to correct a distortion of the projection surface by moving the camera pixel (cx, cy) by a movement vector (-vx, -vy) for each projection image as illustrated in FIG. 11E.

<1-6. Ambient Color Correction>

This is a processing regarding the color correction module 121 of FIG. 2 and block 324 of FIG. 3. In order to detect a finger based on comparison between the projection image and the camera image, a white screen is preferably used as a projection surface. If the projection surface has a pattern or a color, or there is irregularity in a light amount between the center and the edge of the projector 201 or in a sensitivity of the camera 301, finger detection accuracy may be degraded in the center or the edge. The detection accuracy may be degraded due to a color of the screen, illumination light of the screen, irregularity of light caused by the projector, irregularity of the camera, and the like. For this reason, if an influence of ambient light and a diffuse reflection coefficient caused by a difference of color or material of the projection surface is estimated for each point of the projector projection content from the camera image obtained by projecting bright and dark images, and a color of the image input to the camera 301 is corrected to a value proportional to the reflection light against the incident light from the projector 201, such a problem can be addressed.

There is known a Phong reflection model as described below.

$$I_c = k_a i_a + \sum \{k_d(L_j, N_j)i_d + k_s(R_j, V_j)\alpha i_s\}$$

Here, "$\sum$" denotes a summation of "j" over all light beams. $k_a i_a$ denotes an ambient term, $k_d(L_j, N_j)i_d$ denotes a diffuse term, and $k_s(R_j, V_j)ai_s$ denotes a specular term.

In order to simplify this model, if it is assumed that the material (k*) is constant, and ambient/diffuse/specular light sources other than the projector are constant, these are simplified to "$i_d$." Specular reflection caused by the projector is neglected. Diffuse reflection caused by the projector is constant in a light source direction Lj and a normal direction $N_j$ for each pixel position. In addition, if a light attenuation coefficient p in each pixel position is introduced into the diffuse reflection term in consideration of reduction of an ambient light amount to provide "$r = k_d(L_j, Nj)p$," it is possible to obtain "$I_c = I_b + r \cdot i_d$."

First, the luminance $I_c(0)$ of the camera image obtained by projecting the luminance $i_d = 0$ is observed. Then, the luminance $I_c(v)$ of the camera image obtained by projecting the luminance $i_d = v(> 0)$. The observation result is illustrated in FIG. 12.

The "$i_d$" is calculated from the light "$I_c$" observed by the camera 301.

$$I_c(0) = I_b$$

$$I_c(v) = I_b + r \cdot id$$

$$I_b = I_c(0)$$

$$r = (I_c(v) - I_c(0))/v$$

$$i_d = (I_c - I_c(0))v/(I_c(v) - I_c(0))$$

In order to prevent only a particular channel (color) from being saturated, scaling is performed such that each channel is saturated at "$i_d = v$."

The "v" is set to a maximum luminance in order to prevent any channel of any pixel from being saturated. The maximum luminance v can be determined in a high speed through a binary search under a constant exposure amount.

As a result, it is possible to obtain a camera image having no influence from a color caused by ambient light and a diffuse reflection coefficient on a projection surface.

<1-7. Color Correction Direction>

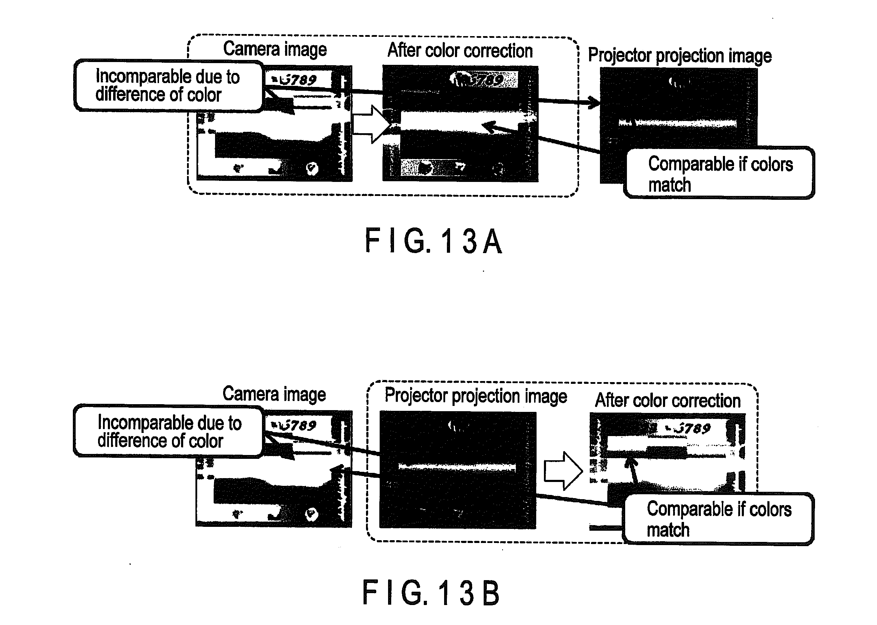

This is a processing regarding the color correction module 121 of FIG. 2 and block 324 of FIG. 3. In order to detect a fingertip based on comparison between the projection image and the camera image, it is preferable that the colors of the camera image and the projection image be nearly the same. In a case where colors of both images are different, and a brightness difference between the projection content and the finger shadow is insignificant, a color may be destructed, and it may be difficult to detect the finger shadow if correction is performed such that a color of the camera image matches a color of the projection image (refer to FIG. 13A). In this regard, if correction is performed such that a color of the projection image matches a color of the camera image by reversing the color correction direction, it is possible to suppress a loss of the camera image information as much as possible and improve detection accuracy (refer to FIG. 13B).

Specifically, a function "f_{p→c}" representing how colors (r, g, b)p in the projection content image Ip match colors (r, g, b)c in the camera image Ic subjected to the position correction and the ambient color correction is calculated in advance. That is, a function "f1 = (r, g, b)p→rc" representing a transformation "(r, g, b)p→{rc}" from the projection image to the camera image is obtained using a support vector regression (SVR) method by focusing on one (for example, r) of the colors r, g, and b obtained by projecting a certain pattern (such as a calibration image). Similarly, for other colors, a function "f2 = (r, g, b)p→gc" and a function "f3 = (r, g, b)p→bc" are obtained. A function f_{p→c} representing a transformation "(r, g, b)p→(r, g, b)c" is obtained based on the functions f1, f2, and f3. Such an operation is calibration. When a new projection content image Ip and a camera image Ic subjected to position correction and ambient color correction are obtained, the projection content image Ip' subjected to color correction can be obtained as "Ip' = f_{p→c}(Ip)" using the function "f_{p→c}."

<1-8. Local Adaptive Luminance Addition>

This is a processing regarding the projection information correction module 112 of FIG. 2 and block 312 of FIG. 3. In order to determine whether or not a shadow is formed due to a luminance difference or the like in a black portion of the projection content when a projector 201 having a small light amount or a high contrast is used, for example, a transformation for raising the luminance value of the projection content from [0, ..., 255] to [20, ..., 255] may be performed. In this case, an appearance change may occur in areas other than the black portion. For this reason, in a case where information on an immediately previous fingertip position can be used, it is possible to alleviate an appearance change by adjusting (raising) the luminance values of only pixels around the fingertip. Alternatively, it is possible to alleviate an appearance change just by changing only a pixel for which a necessary luminance is not obtained or pixels including the pixel.

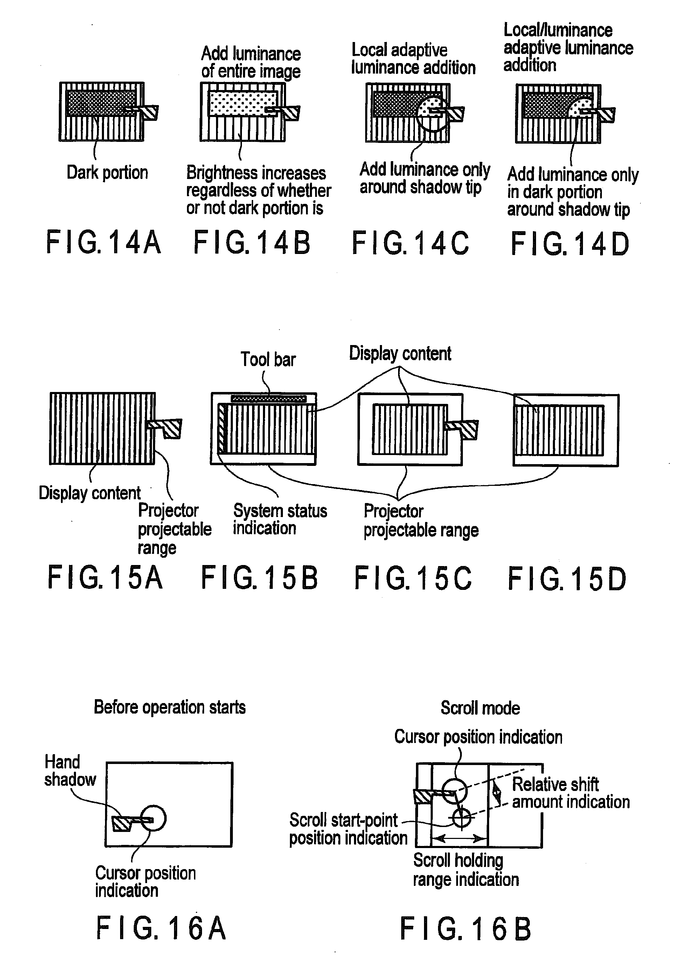

As illustrated in FIG. 14A, a hand shadow may not be detected in a case where the hand shadow exists in a dark portion of the projection content. For this reason, as illustrated in FIG. 14B, the luminance value of the projection content is uniformly raised (for example, a luminance value range is transformed from [0, ..., 255] to [20, ..., 255]. In a case where the shadow tip of the fingertip is detected at a position (x, y), assuming that the fingertip position is not significantly changed thereafter, the luminance value of only the pixels around the position (x, y) is raised as illustrated in FIG. 14C, and luminance value is not changed for other portions. Alternatively, as illustrated in FIG. 14D, luminance values of a neighboring portion of the position (x, y) and a dark portion of the projection content are raised, and no luminance value is changed in other portions. In this case, the luminance of the neighboring portion may be uniformly set, or a luminance increase may be suppressed as a boundary of the luminance operation portion approaches the outside to keep a low profile. Alternatively, a luminance increase may be suppressed or stopped in order to obtain visibility in the vicinity of the shadow tip. In this method, although the luminance may be converted regardless of the original luminance value of the projection content, the luminance value may be manipulated only when the brightness v of the projection content is equal to or lower than a certain value. In this case, in order to prevent reversing of the luminance value, a conversion curve may be smoothly set.

<1-9. Operation Improvement in Neighboring Portion>

This is a processing regarding the projection information correction module 112 of FIG. 2 and block 312 of FIG. 3. As illustrated in FIG. 15A, it may be difficult to detect a shadow of a gesture made in the side where a user stands. In this regard, as illustrated in FIGS. 15C and 15D, if an area for displaying the projection content is set to be small in advance, and an image (for example, entirely white) where a shadow can be easily detected is displayed in the side where a user stands with a high possibility (one of the left and right sides or both sides), it is possible to improve operation in a neighboring portion of the projection content. As illustrated in FIG. 15B, it is also possible to effectively use a margin by providing a margin with an area capable of displaying or changing information regarding operations or settings of a system.

Specifically, the side where a user stands is detected through the same processing as that described in conjunction with FIG. 38, based on a position on the screen corresponding to the origin of the shadow, or by assuming a portion where a lot of motions are made on the camera image as the side where a user stands. As illustrated in FIGS. 15C and 15D, the projection content is displayed in a smaller size in order to provide or increase a margin in the side where a user stands. The margin may have a high luminance value in order to easily perform shadow detection. Since it is difficult to make a gesture in the margin of the side where a user stands, the margin may be used as an area for displaying a status with no necessity of operation (refer to FIG. 15B, here, it is assumed that a user stands in the left). In a case where a margin can be provided in an area other than the side where a user stands in order to hold aspect ratio of the projection content, a tool bar and the like may be displayed to increase convenience (refer to FIG. 15B).

<2. User Interface>

Description will now be made for a processing for implementing diverse and various operations without limiting to a simple click gesture by manipulating a finger. The chapter <2. User Interface> is a processing regarding the gesture information generator 141 and the gesture output device 143 of FIG. 2 and block 336 of FIG. 3.

<2-1. Scroll>

It is conceivable that only one of fingertips or hands is detected regardless of a shape, and rest thereof is allocated to a left click operation. However, instead of the click gesture based on rest of a fingertip or a hand, a scroll gesture can be implemented with a velocity based on a relative shift amount by setting, as a start point, a gesture start point by moving a fingertip or a hand. In this case, if the gesture start point is displayed on a screen, it is possible to implement an operation easily recognizable by a user.

FIGS. 16A and 16B illustrate a processing for implementing a scroll operation by moving a finger, a hand, and the like. As illustrated in FIG. 16A, if it is detected that a shadow tip rests or a confirmation operation has been made, a scroll mode starts. An example of the confirmation operation will be described in Point 3. Alternatively, a scroll mode may start only when the shadow has a particular shape. Alternatively, a scroll mode may start only when a particular application is used, or in a particular application state.

If an icon indicating a "start point" (circle in FIG. 16A) is displayed in a shadow tip position at the start of the scroll mode, a user can easily recognize the start of the scroll mode and easily perform operation. As a finger moves, the current shadow tip position and the start point are continuously displayed, and an image obtained by tying them with a straight line is displayed (refer to FIG. 16B).

A scroll velocity v is determined as "v = f(L) or v = f(L')" by using a length L obtained by tying the two points or a length L' obtained by vertically projecting the length L. The function f is set to, for example, "f(L) = min(upper limit, L*first constant)," or the like. The first constant may be either positive or negative or may be set by a user.

An application immediately under the start point is vertically scrolled depending on the scroll velocity v. In a case where the shadow tip is deviated from an operable range, or shadow detection is failed, the scroll mode is terminated, and the display of the "start point" also stops. In this case, in order to prevent the scroll mode from being terminated abruptly due to an instant detection failure and the like, the scroll mode may be terminated if the shadow tip is deviated from the operable range, or shadow detection is failed continuously for a period of time.

The scroll velocity v may be applied to a zoom instead of the scroll. In this case, similarly, the first constant may be either positive or negative or may be set by a user.

The scroll velocity v may be allocated to a horizontal scroll instead of a vertical scroll. In this case, the scroll velocity v is converted into a horizontal scroll velocity, the length L' is obtained by projecting the length L in a horizontal direction, and the operable range is rotated by 90°.

In addition, the scroll velocity v may be allocated to both the horizontal and vertical scrolls. In this case, the vertical scroll velocity $v_x$ and the horizontal scroll velocity $v_y$ are individually calculated using the aforementioned method. The operable range may not be set or may be set to a circle within a certain range from the start point.

The scroll velocity v may be set as "scroll to an initial movement direction." In this case, while the length L is short, the scroll velocity v is allocated to both vertical and horizontal scrolls or is not allocated to any scroll. As the length L is equal to or longer than a threshold value TL, the scroll velocity v is allocated to the vertical scroll if the line obtained by tying the start point and the current position is nearly vertical. Otherwise, if the line obtained by tying the start point and the current position is nearly horizontal, the scroll velocity is allocated to the horizontal scroll, so that an operable range suitable for each direction is set and displayed.

<2-2. Zoom>

It is conceivable that only one of the fingertips or hands is detected regardless of the shape thereof, and rest thereof is allocated to a left click operation. However, instead of the click operation caused by resting a fingertip or a hand, an intuitive zoom operation may be implemented by detecting a plurality of fingers from the shadow image and analyzing a relative distance change as a zoom ratio change. In this case, a user can make an easily recognizable gesture by displaying a distance between fingers at the start of the gesture and a distance between the current fingers.

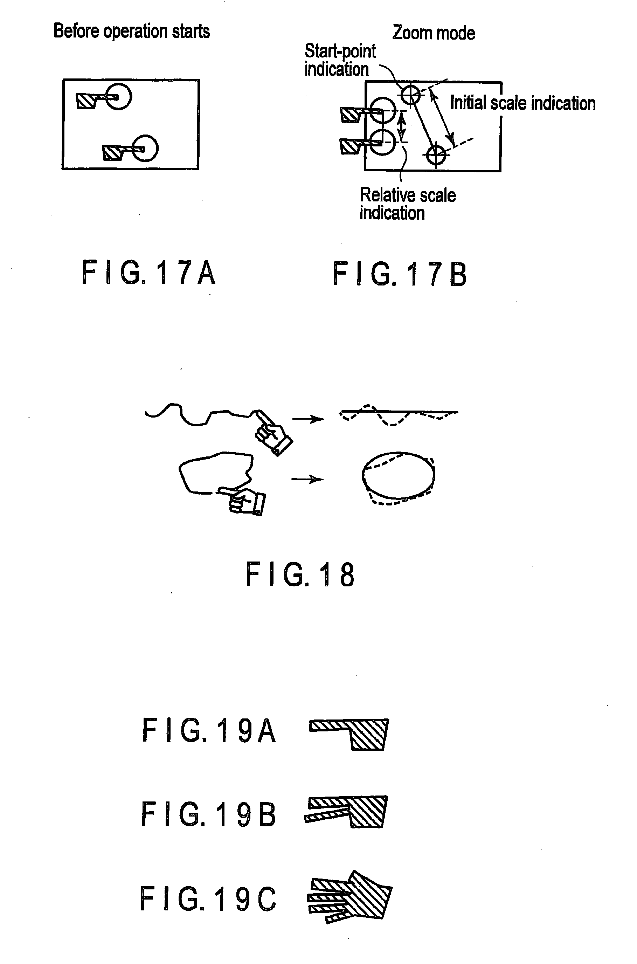

FIGS. 17A and 17B are diagrams illustrating a processing for implementing a zoom operation by moving a finger. As illustrated in FIG. 17A, a zoom mode starts if it is detected that a pair of shadow tips rest, or there is a confirmation operation described below. Alternatively, the zoom mode may start only when the shadow has a particular shape. Alternatively, the zoom mode may start only when a particular application is used, or in a particular application state.

If icons indicating the "start points" (circles in FIG. 17B) in a plurality of shadow tip positions and a straight light obtained by tying the start points are displayed at the start of the zoom mode, a user can easily recognize the start of the zoom mode and easily perform operation. As the finger moves, the start points and the straight line obtained by tying the start points is continuously displayed, and a straight line obtained by tying the current shadow tip positions is also projected (refer to FIG. 17B).

A zoom ratio m is determined as "m = f(L, Li)" using the current length L between the two points and an initial length Li between the start points. The function f is set to, for example, "f(L, Li) = min(upper limit, L/Li*second constant)." The second constant may be arbitrarily set or may be set by a user.

An application immediately under the start point is zoomed out depending on the zoom ratio m. The zoom mode is terminated, and display of the "start point" is interrupted in a case where one or both of the shadow tips are deviated from an operable range, or detection of any one of the shadows is failed. In this case, in order to prevent the zoom mode from being terminated abruptly due to an instant detection failure, the zoom mode may be terminated when the shadow tip is deviated from the operable range, or shadow detection is failed continuously for a while.

<2-3. Drag>

It is conceivable that only one of fingertips or hands is detected regardless of the shapes thereof, and rest thereof is allocated to the left click operation. However, a drag start operation may be implemented by moving a fingertip or a hand instead of a click operation made by resting a fingertip or a hand. In this case, the drag may be terminated by hiding a finger or resting a finger once more.

A drag mode starts as it is detected that the shadow tip rests, or there is a confirmation operation described below. Alternatively, the drag mode may start only when the shadow has a particular shape. Alternatively, the drag mode may start only when a particular application is used, or in a particular application state. Alternatively, the drag mode may start only when it is allowed by a GUI object state immediately under a cursor.

A drag start event is transmitted in the shadow tip position at the start of the drag mode. In response to a cursor movement, a drag movement event is transmitted. When detection of a shadow is failed, the drag mode is terminated, and a drag termination event is transmitted. In this case, in order to prevent the drag mode from being terminated abruptly due to an instant detection failure or the like, the drag mode may be terminated when detection of a shadow is failed continuously for a while.

<2-4. Additional Transmission of Click or Key>

It is conceivable that only one of fingertips or hands is detected regardless of the shape thereof, and rest thereof is allocated to the left click operation. However, allocation to further various operations is possible with issuing an event such as a right click, a center button click, and key pressing depending on detection features of hands and like instead of a click operation made by resting a fingertip or a hand.

Various operations are implemented by detecting rest of the shadow tip, use of a particular application, a particular application state, or a confirmation operation described below and issuing an event such as a right click, a center button click, and key pressing depending on a shadow shape, an application type, or an application state as well as a click or the scroll/zoom/drag described above.

<2-5. Marker Drawing Shaping>

A user may emphasize any portion of the projection content by displaying a locus of the drag gesture described above and displaying a figure on the projection content of the projector 201. In addition, since a locus of a shadow tip may not be smooth, it is possible to perform drawing on a screen by shaping the locus into a straight line, a curve, or a circle without any necessity of a cautious operation.

A marker drawing mode starts if it is detected that a particular finger shape or a tool bar is selected, or there is a confirmation operation described below. Alternatively, the marker drawing mode may start only when the shadow has a particular shape. Alternatively, the marker drawing mode may start only when a particular application is used, or in a particular application state.

A system is controlled depending on the drag gesture described above. As illustrated in FIG. 18, a locus of the drag is displayed, and a figure is displayed on the projector projection content. This locus may be shaped and displayed if the shaping is set in advance or if it is determined that the figure drawing is complicated because a least square error of the straight line or the circle of the locus is large.

In this case, a figure (such as a straight line or a circle) suitable at any time during a drag may be continuously shaped and may be confirmed when the drag is terminated. Alternatively, shaping may be performed when the drag is terminated without performing shaping during the drag. As a result, a user can emphasize any portion of the projection content. In addition, during the drag, in order to distinguish figures before and after the shaping, both figures before and after the shaping are displayed with a different color, and the figure after the shaping may remain when the drag is terminated.

<2-6. Finger Shape>

A presentation of a finger having a particular thickness or shape is detected. Based on the detection result, allocation is made to a click gesture (FIG. 19A), a scroll gesture (FIG. 19B), or a drag gesture (FIG. 19C), or other gestures, so that a user can select a plurality of operation methods in a simple manner.
Specifically, when a shadow tip is detected, a thickness or shape of a finger is determined using the following method.

(a) The maximum number n of successive shadow pixels in a vertical direction of the shadow is calculated in a position going back by x pixels from the shadow tip to the shadow origin. The thickness (or number) of fingers is estimated depending on which of ranges divided by one or a plurality of threshold values the number of pixels n is included.
(b) After the maximum number n of successive shadow pixels in a vertical direction of the shadow is obtained in a position going back by x pixels from the shadow tip to the shadow origin, an operation is performed. The number of fingers is estimated to "m/2," where "m" denotes a pixel value switching frequency between "0" (non-shadow) and "1" (shadow).
(c) w*h pixels including the shadow tip are cut out, and a feature amount such as a Co-occurrence Histograms of Oriented Gradient (CoHOG) is extracted. Then, a suitable fingertip shape is estimated by applying a classifier such as a support vector machine (SVM) for a plurality of fingertip shapes registered in advance.

Depending on the determined fingertip shape, allocation is made to a click gesture (FIG. 19A), a scroll gesture (19B), a drag gesture (FIG. 19C), or other gestures, so that a user can select a plurality of operation methods in a simple manner.

<2-7. Finger Direction>

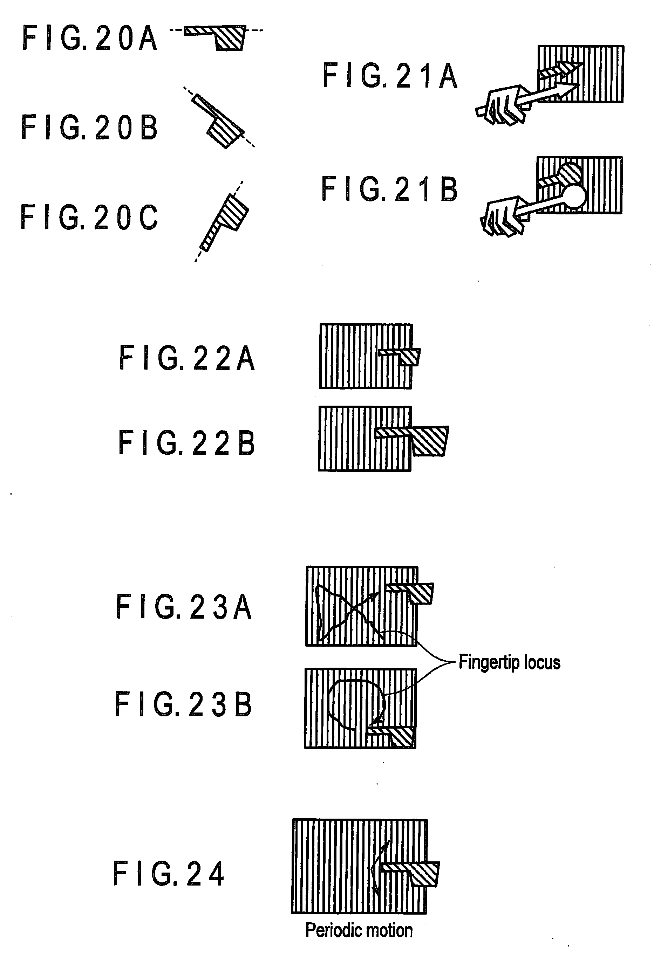

By detecting a finger inclination on a screen, allocation to processing or operations can be made depending on the inclination. For example, as illustrated in FIG. 20B, when a finger is upwardly directed, allocation is made to a marker drawing functionality. As illustrated in FIG. 20C, when a finger is downwardly directed, a tool bar is displayed. Otherwise (for example, FIG. 20A), allocation can be made to perform a click operation.
Specifically, when a shadow tip is detected, a finger direction is estimated based on an inclination of a principal axis through a principal component analysis or by adapting a set of shadow positions (x, y) of w*h pixels including the shadow tip for a straight line using a least-squares method. Depending on the finger inclination, allocation is made to a click gesture (FIG. 19A), a scroll gesture (FIG. 19B), a drag gesture (FIG. 19C), or other gestures.

<2-8. Gesture Type Change by Recognizing Grasped Object>

If a characteristic shadow is projected, or operation is performed by holding a dedicated pointer (FIGS. 21A and 21B) having a characteristic color/shape on a hand, it is possible to perform operation depending on a color/shape of the pointer. In addition, a different operation (such as drawing/eraser) can be performed depending on a method of holding the dedicated pointer (which of the front or rear side is directed first, a twisting angle, and the like).
Specifically, several types of bar-like dedicated pointers whose tip or support projects a characteristic shadow are prepared. A characteristic shadow (FIGS. 21A and 21B) that can be formed by manipulating a particular bar-like dedicated pointer on a hand and which of the bar-like dedicated pointers registered in advance is used are determined using the method described in the chapter <2-6. Finger Shape>. Alternatively, if this particular bar-like dedicated pointer is configured to make a significantly different shadow depending on a posture thereof, and such representative different shadow shapes are registered in advance, a single dedicated pointer can be classified into different shadow tip shapes depending on how to hold it. For example, a dedicated pointer having a significantly different shadow shape as it rotates or a dedicated pointer that forms different shadows in both ends of the bar-like portion may be used.
Depending on a device used in determination or a posture thereof, allocation is made to a click gesture (FIG. 19A), a scroll gesture (FIG. 19B), a drag gesture (FIG. 19C), or other gestures.

<2-9. Distance-based Operation>

If a change of a shadow size or a shadow dimming quantity (FIGS. 22A and 22B) is detected as a user moves a hand back and forth with respect to the projector 201, an operation such as zoom-in or zoom-out may be performed based on such a forward/backward movement.

Specifically, when a shadow tip is detected, w*h pixels including the shadow tip is cut out from a shadow image, an area where a shadow probability p is equal to or higher than a threshold value t1 is set to a shadow area a, an area where a shadow probability p is equal to or lower than a threshold value t2 is set to a non-shadow area b, and other portions are set to a dimming area c.

Using a shadow size (shadow area) a or a dimming area c, a distance f(a) or g(c) between the hand and the screen S is estimated. The estimated value may be substituted with the scroll amount or the zoom amount described in the chapter <2-1. Scroll> or <2-2. Zoom> (FIGS. 22A and 22B).

<2-10. Locus-based Operation>

If a locus of a finger (FIGS. 23A and 23B) is recognized, and allocation is made to an infrequent functionality such as activation or inactivation of a particular application, it is possible to reduce a phase that a user directly manipulates an electronic apparatus 101.

Specifically, when a shadow tip is detected, this detection position (x, y) is recorded at all times.

If "t" denotes the current time, a sequence L (FIG. 23) of the position (x, y) included in an interval [t1, t2] is obtained from the recording based on d1 and d2 set in advance using equations $t1 = t - d1$ and $t2 = t - d2$ satisfying a condition $t1 < t2 < t$.

For each element (x, y) of the sequence L, normalization is performed using a computation such as "$(x, y): = ((x - x_{t2})/max_{L(x)}, (y - y_{t2})/max_{L(y)})$," and re-sampling is performed to obtain the number of elements N. In addition, it is determined which of a plurality of loci registered in advance matches using a classifier such as an SVM.

A registered processing is executed depending on the registered locus. For example, it is possible to reduce a phase that a user directly manipulates a PC by performing allocation to an infrequent functionality such as activation or inactivation of a particular application.

<2-11. Operation-based Operation>

A cyclic operation such as reciprocation of a finger (FIG. 24) or a velocity thereof is recognized, and allocation is performed to a slightly infrequent functionality such as page ejection or screen erasure, it is possible to reduce a phase that a user directly manipulates a PC.

Specifically, when a shadow tip is detected, this detection position (x, y) is stored at all times.

If "t" denotes the current time, a sequence L (FIG. 24) of the position (x, y) included in an interval [t1, t2] is obtained from the recording based on "d1" and "d2" set in advance using equations "$t1 = t - d1$" and "$t2 = t - d2$" satisfying a condition "$t1<t2<t$."

For each element (x, y) of the sequence L, normalization is performed using a computation such as "$(x, y): = ((x - xt_2)/max_{L(|x|)}, (y - y_{t2})/max_{L(|y|)})$," and polling is performed to a histogram obtained by dividing a range "$[-1, 1]x[-1, 1]$" by "$N*M$." In addition, it is determined which of a plurality of operations registered in advance matches using a classifier such as a SVM. In addition, a velocity characteristic obtained by performing polling for a derivative of the element (x, y) within a range of "$[-1, 1]\times[-1, 1]$" on a X*Y-divided histogram may be used together.

A registered processing is executed based on the registered operation. For example, it is possible to reduce a phase that a user directly manipulates a PC by performing allocation to a slightly infrequent functionality such as page ejection or screen erasure.

<2-12. Change of Operation Allocation for Operation Target>

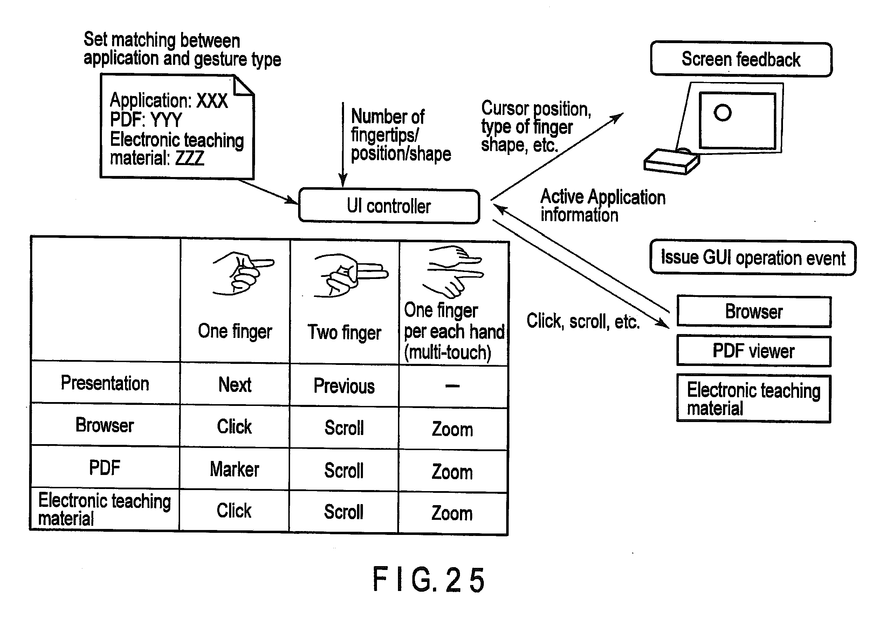

A click is transmitted without recognizing an operation target. However, it is possible to manipulate a plurality of applications having different operation systems by recognizing an operation target and changing user's poses set in advance and a display method on the issued event/screen (refer to FIG. 25).

Specifically, a currently focused application is recognized when a shadow tip is detected, periodically at a certain time, or in response to a change of the cursor position. Alternatively, an application state is recognized. Alternatively, a GUI object state immediately under the cursor position is recognized.

When rest of a shadow tip or other operations are detected, an issued event or a display method on a screen is changed based on a predetermined matching relationship depending on an application recognized in advance, a state thereof, and a GUI object state.

The example of FIG. 25 illustrates an application used in a presentation using slides. In this example, a page operation is performed using a finger gesture. A one-finger gesture corresponds to a "Next Page," and a two-finger gesture corresponds to a "Previous Page." In such a presentation, an operation can be made using a hand while a user presents references of slides in a conference or the like. Therefore, a user is not necessary to hold anything on a hand and can make a presentation freely. Since a special apparatus is not necessary, anybody can make an operation without connection to a PC (it is not necessary to request anybody to manipulate a PC to turn over pages while seeing slides in a discussion).

In the case of the Web-browsing, a one-finger gesture corresponds to a click, a two-finger gesture corresponds to a scroll gesture, and a multi-touch gesture (one finger per each hand) corresponds to a zoom. In the Web-browsing, an operation is performed while referencing the Web information in a conference or the like, and a zoom-in or zoom-out operation can be appropriately made to see details of the information searched in the Web. In a case where reference materials are temporarily displayed in a lecture or the like, a presentation/operation can be rapidly performed in a simplified manner.

In a presentation of a PDF file (input using a simplified marker), a one-finger gesture corresponds to a marker, a two-finger gesture corresponds to a scroll, and a multi-touch gesture (one finger per each hand) corresponds to a zoom. In the PDF file presentation, a marking is appropriately added to an emphasis portion while reference materials are presented in a conference or the like. Therefore, in a large conference room, details of the reference materials can be viewed even by a distant audience through a zoom-in or zoom-out operation. In addition, in the field of education, a teacher or a student can select an answer or point out an important portion.

In the case of a web-based electronic teaching material used for game/education purposes as web contents for children, a one-finger gesture corresponds to a click, a two-finger gesture corresponds to a scroll, and a multi-touch (one finger per each hand) corresponds to a zoom. As a result, in kindergartens or lower classes of elementary schools, children can make an operation on Web-based simplified game contents or children English teaching contents to share a situation with children.

<3. Operation Timing Detection>

This is a processing regarding the fingertip detector 133 of FIG. 2 and block 334 of FIG. 3.

<3-1. Screen Touch Detection Based on Shadow Erasure>

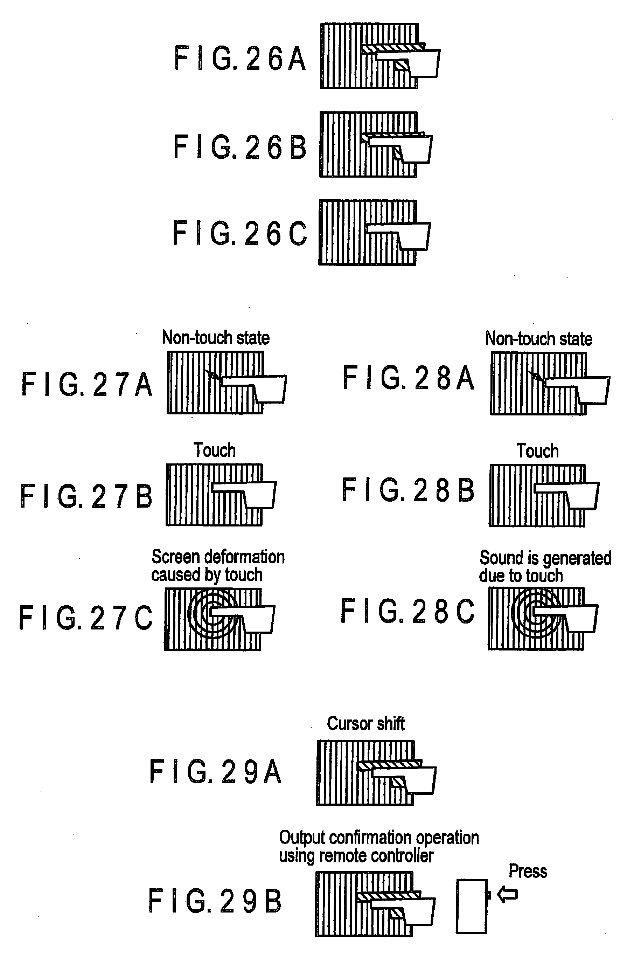

In the aforementioned description, a click or the like is transmitted by resting a finger shadow. However, as illustrated in FIGS. 26A, 26B, and 26C, a click or the like may be transmitted by detecting that a shadow is hidden by a hand.

Specifically, a shadow tip is detected (FIG. 26A).

As a hand approaches the screen S, the shadow area is obscured by a hand and is finally narrowed (FIG. 26B).

If it is detected that the shadow area is erased from the previous position (FIG. 26C), the previous position is considered as a screen touch position and is associated with a click or various gestures described above.

Since an actual screen touch instant can be obtained, an operation timing becomes clear, and a operation feeling is improved.

<3-2. Vibration-based Screen Touch Detection>

In the aforementioned description, a click or the like is transmitted by resting a finger shadow. However, a user input such as a click can be detected and transmitted by detecting a slight vibration on a screen generated when a hand touches the screen as illustrated in FIGS. 27A, 27B, and 27C. A movement in a touch state may also be detected and be allocated to gestures such as a scroll, a zoom, or a drag.

Specifically, a motion on the content projected onto the screen is monitored. A user input is sensed by detecting an abrupt motion (FIG. 27C) exceeding a predetermined threshold value. A center of the area where such a motion generates a ripple in a concentric circle shape is detected as a screen touch position and is associated with various gestures described above such as a click.

Since an actual screen touch instant can be obtained, an operation timing becomes clear, and an operation feeling is improved.

<3-3. Sound-based Screen Touch Detection>

In the aforementioned description, a click or the like is transmitted by resting a finger shadow. However, if a microphone is installed in a screen touch position or in the vicinity of the screen as illustrated in FIGS. 28A, 28B, and 28C, it is possible to detect an operation timing and transmit a click or the like by detecting a sound generated when a user touches the screen. Similarly, a movement in a touch state may be detected and allocated to gestures such as a scroll, a zoom, and a drag.

Specifically, a microphone is installed in a screen touch position or in the vicinity of the screen. If a steep increase of an acoustic pressure exceeding a threshold value set in advance or set based on a sound input by a user in a test stage is detected, it is possible to detect a screen touch of a user. As a touch point, the previous shadow tip position is used.

Since an actual screen touch instant can be obtained, an operation timing becomes clear, and an operation feeling is improved.

<3-4. Association with Remote Control>

In the aforementioned description, a click or the like is transmitted by resting a finger shadow. However, if a shadow is used to designate an operation position as illustrated in FIG. 29A, and a remote controller that transmits an operation timing of a click or the like to a system in a wired or wireless manner is used to detect an operation timing as illustrated in FIG. 29B, it is possible to make a faster operation. For example, it is possible to use an application program of a smart phone to notify a system of a message "click at the current position" upon detection of a pressing of a "volume" button.

Specifically, a shadow is used to designate an operation position (FIG. 29A).

A user holds a device that outputs an operation timing of a click or the like in a wired or wireless manner to a system. When a user desires to perform a confirmation operation, a user performs an input operation by pressing a button or manipulating a touch panel. For example, it is possible to user an application program of a smart phone to notify a system of a message "click at the current position" upon detection of a pressing of a "volume" button.

Since an instant at which a determination operation is to be performed can be specified, an operation timing becomes accurate, and an operation feeling is improved.

<4. Shadow Influence Reduction>

This is a processing regarding the fingertip detector 133 of FIG. 2 and block 334 of FIG. 3.

<4-1. Operation Position Transformation>

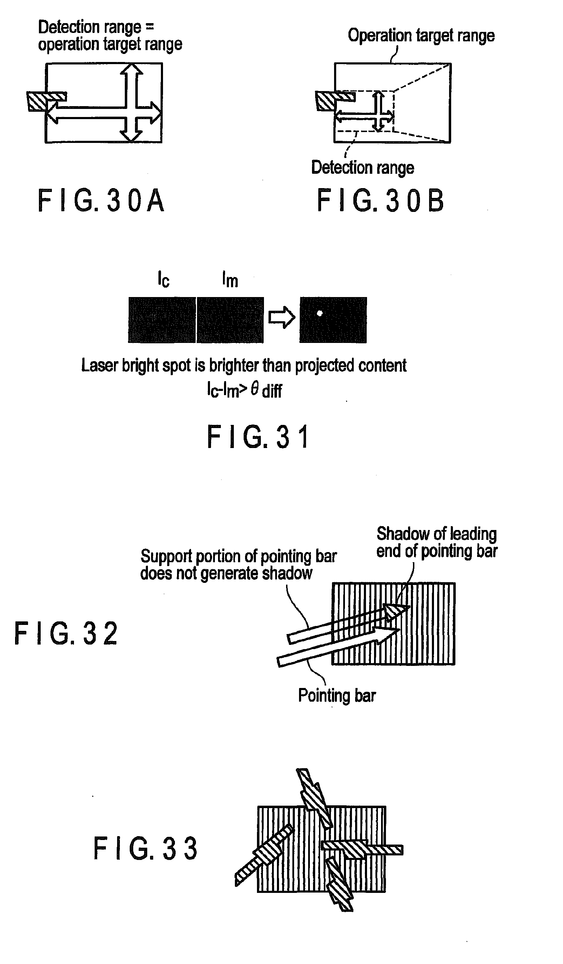

Typically, a tip indicated by a shadow is set as a cursor (FIG. 30A). However, if a tip indicated by a shadow is transformed through an affine transformation or the like, and a cursor position is set in the transformed area (FIG. 30B), it is possible to perform a gesture without making a significantly large shadow on the projection content. In addition, it is possible to perform an operation on a large screen even when a hand does not reach the entire screen.

Specifically, an operation area is set based on a user standing position or a projector size or using an area set by a user in advance (FIG. 30A). Here, the operation area corresponds to a cursor detection area. In this state, it is necessary to point the entire screen. Therefore, the projection content may be blocked by a finger shadow.

In this regard, an operation on the operation area is set as a cursor position after a transformation (such as an affine transformation) mapping the operation area to the entire screen (FIG. 30B).

<4-2. Laser Pointer>

A position on the projection content irradiated from a laser pointer may be used instead of the shadow position (FIG. 31). In addition, an operation may be performed using both the shadow and the laser pointer. Alternatively, only one of them may be used in the operation.

Specifically, in a shadow image creating sequence, if a difference Ic - Im between the camera image Ic subjected to correction and the projection content Im subjected to correction is larger than a threshold value $\theta$, a bright spot of the laser pointer is detected instead of the shadow (FIG. 31).

As a result, it is possible to perform an operation such that an influence on projection is insignificant without making a shadow on the projection content. In addition, it is possible to perform an operation even when a hand does not reach the entire screen or even in a distant position.

<4-3. Transparent Pointing Bar>

Typically, since a shadow is formed by a hand or a pointing bar, a large portion of projection contents may be blocked by a hand or a pointing bar. If a tip of the pointing bar is opaque as it is, to form a shadow while other portions are transparent, it is possible to perform an operation without making a shadow on the projection content as much as possible (FIG. 32).

<5. Multiple Users>

This is a processing regarding the fingertip detector 133 of FIG. 2 and block 334 of FIG. 3.

Typically, an operation on a projector projection content is performed from any one of the left or right sides and is not simultaneously performed from two or more sides. However, if a shadow start point is searched around the projection content, and a tip of the shadow extending therefrom is determined as a fingertip, it is possible to allow a plurality of users to simultaneously perform operations from a plurality of directions (FIG. 33). As a result, more users can perform operations by projecting the projection content onto a top surface of a table.

Specifically, the shadow image is segmented into a plurality of areas without being connected through labeling to obtain shadow segments. A portion where each shadow segment adjoins a circumferential edge of the screen is referred to as an "origin." For each shadow segment, a tip portion of the shadow is detected according to a method of the related art, and allocation is performed to a click or other gestures through a confirmation operation including rest of the shadow tip or other operations.

<6. Whiteboard>

This is a processing regarding the color correction module 121 of FIG. 2 and block 324 of FIG. 3.

<6-1. Drawing Content Incorporation>

In a case where a whiteboard is used as a projection surface, it may be difficult to use a drawing content of the whiteboard when projection is performed on the whiteboard.

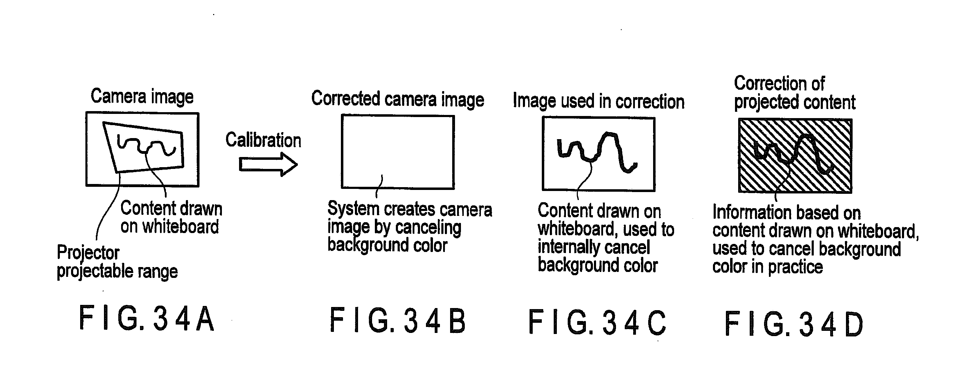

If the "ambient color correction" described in the chapter <1-6> is performed at the time of system activation, the content (FIG. 34A) already drawn on the whiteboard and the like can be incorporated regardless of the camera position without using an explicit marker necessary in a similar technique while a transformation is performed to make the projection content of the projector be rectangular (FIG. 34B). This drawing content may be stored, printed, or re-displayed.

Specifically, the "ambient color correction" is performed at the time of system activation by using a whiteboard (FIGS. 34A and 34B) where something is drawn as a projection surface.

In the "ambient color correction," a diffuse reflection coefficient d and the ambient light i in each pixel within a projector projection range are obtained. Here, "d" indicates information on the content (FIG. 34C) drawn on the whiteboard. This information is stored after a format is adjusted through noise removal, binarization, or the like as necessary.

The stored drawing content may be printed or used as data from an application employing this system.

Accordingly, it is possible to conveniently utilize the whiteboard drawing content as electronic information by using the results of "position correction" and "ambient color correction" executed in advance without arranging, beforehand, a marker or the like, which is necessary in a method of the related art.

<6-2. Drawing Content Cancellation>

By mixing an image for canceling the drawing content (FIG. 34D) with the projection content after the content drawn on the whiteboard is incorporated through the method described in the chapter <6-1>, it is possible to project the projection content as if nothing has been drawn on the whiteboard. Therefore, it is possible to eliminate an effort of erasing the whiteboard.

An appearance color is set to "i*(first constant) + p*d*(second constant)," where "i" denotes ambient light in any position, "d" denotes a diffuse reflection coefficient, and "p" denotes a projector output. Therefore, the drawing target color c can be expressed as "c = i*(first constant) + p*d*(second constant)," and the projection target color p can be determined as "p = (c - i*(first constant))/p/(second constant)."

As a result, it is possible to project the projection content as if nothing has been written on the whiteboard and eliminate an effort of erasing the whiteboard. A user can easily use the system since there is no need to erase the whiteboard.

<7. Dynamic Calibration>

This is a processing regarding the MPU 103 of FIG. 2 and the entirety of FIG. 3.

<7-1. Camera Deviation Detection/Re-calibration>

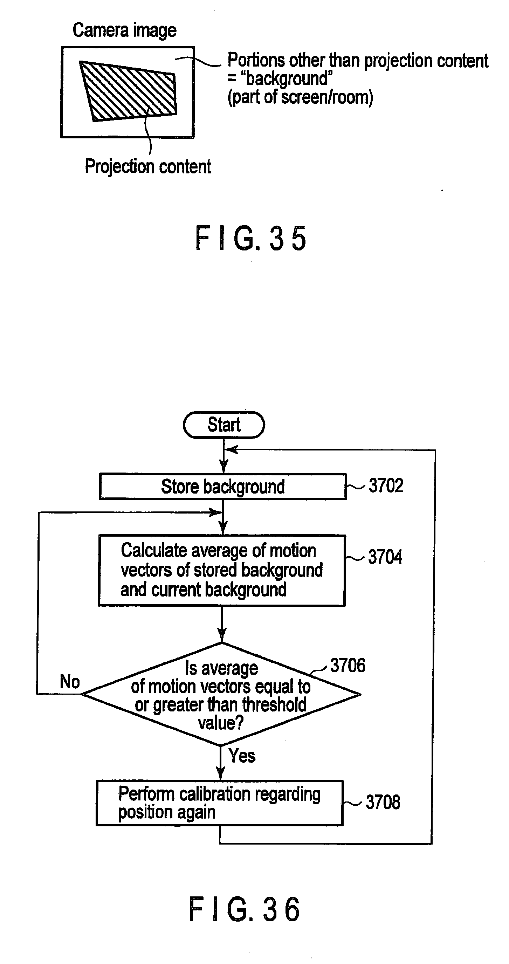

As a significant movement of an object in portions (FIG. 35) other than the projection content in the camera image is detected, it is determined that the camera moves, so that an operation is halted temporarily. Then, calibration may be performed again, or re-calibration may be requested to a user.

FIG. 36 is a flowchart illustrating an example of a camera deviation detection/re-calibration flow. In block 3702, a background is stored. In block 3704, a motion of the current image from the stored image is calculated in portions other than the projection content of the camera image. In block 3706, it is determined whether or not an average value of the motion is equal to or higher than a certain threshold value. If the average value of the motion is equal to or higher than the threshold value, it is determined that the camera position is significantly shifted. In block 3708, the operation is halted temporarily, and calibration is performed again. Since time is consumed in calibration, re-calibration may be requested by a user instead of automatic re-calibration.

As a result, in a case where the camera is operated incautiously, a system is not malfunctioned suddenly, but can return to a normal state with a little effort.

<7-2. Illumination Change Detection/Recalibration>

As a significant change of the luminance value is detected in a portion (FIG. 35) corresponding to an object other than the projection content of the camera image, it is determined that an illumination changes. Then, the operation may stop temporarily to perform calibration again, or re-calibration may be requested to a user.

FIG. 37 is a flowchart illustrating an example of a camera deviation detection/re-calibration flow. In block 3802, a background is stored. In block 3804, a change of the luminance value between the recorded image and the current image is calculated for portions other than the projection content of the camera image. In block 3806, it is determined whether or not an average value of the luminance difference is equal to or larger than a certain threshold value. If the average value of the luminance difference is equal to or larger than the threshold value, it is determined that an illumination significantly changes. In block 3808, the operation is halted temporarily, and calibration is performed again. Since time is consumed in calibration, re-calibration may be requested by a user instead of automatic re-calibration.

As a result, in a case where an illumination condition changes, a system is not malfunctioned suddenly, but can return to a normal state with a little effort.

**Claims**

1. An electronic apparatus connectable to a projector that projects projection information onto a projection surface to create a projection image and a camera that captures the projection image, **characterized by** comprising:

   an object detector (127) configured to detect an object between the projector and the projection surface based on the projection information and captured information from the camera; and
   a processor (113) configured to perform an object emphasis processing for at least one of the projection information and the captured information.

2. The electronic apparatus of claim 1, **characterized in that** the object emphasis processing comprises an exposure adjustment or a white balance adjustment (116, 320) of the camera such that a difference between an object portion included in the captured information and other portions is emphasized.

3. The electronic apparatus of claim 1, **characterized in that** the object emphasis processing comprises a processing (121, 324) of matching a color of the projection information and a color of the captured information.

4. The electronic apparatus of claim 1, **characterized in that** the object emphasis processing comprises a processing (112, 312) of increasing a luminance of the projection information.

5. An information processing method of an electronic apparatus connectable to a projector that projects projection information onto a projection surface to create a projection image and a camera that captures the projection image, the method **characterized by** comprising:

   detecting an object between the projector and the projection surface based on the projection information and captured information from the camera; and
   performing an object emphasis processing for at least one of the projection information and the captured information.

**6.** A non-transitory computer readable medium having stored thereon a computer program which is executable by a computer, the computer program controlling the computer to execute functions of:

detecting an object between the projector and the projection surface based on the projection information and captured information from the camera; and
performing an object emphasis processing for at least one of the projection information and the captured information.

FIG. 1

FIG. 2

Projection information — 310

↓

Correction — 312

301

↓

Camera ← 301                    Projector — 201

↓                                ↓

Projection position correction — 316

↓

Exposure/WB control — 320

↓                                ↓

Automatic distortion correction — 322

↓

Ambient color correction — 324

↓                                ↓

Projection color correction — 326

↓                                ↓

Delay correction — 328

↓                                ↓

Blur correction — 330

↓                                ↓

Shadow/bright-spot detection — 332

↓                                ↓                    334                    338

Fingertip detection (including prediction/ stabilization/detection position conversion)          Target application detection

↓                    ↓                                ↓

UI operation management

336          ↓                                        ↓

Display GUI                    Target application operation

340                            342

F I G. 3

FIG. 4A

Camera image

User projection image

Position correction

FIG. 4B

Camera image

Calibration image

Position correction

Obtain projector projection image —501

Calculate number of features and intensities thereof —502

Are number of features and intensities equal to or higher than threshold values? —504

No

Yes

Position correction —506

End

Project calibration image —508

FIG. 5

```
        ( Obtain projector projection image )──601
                        │
                        ▼
        ┌───────────────────────────────┐
        │    Calculate color diversity   │──602
        └───────────────────────────────┘
                        │
                        │         ┌──────────────────────────┐
                        ▼         │                          │
                      ╱╲          604                        │
           No      ╱      ╲   Is color                       │
         ◄───────╱  diversity equal to or ╲                  │
                 ╲  higher than threshold ╱                  │
                   ╲      value?      ╱                      │
                     ╲╱                                      │
                        │ Yes                                │
                        ▼                                    │
        ┌───────────────────────────────┐                   │
        │        Color correction        │──606              │
        └───────────────────────────────┘                   │
                        │                                    │
                        ▼                                    │
                  (     End      )                           │
                                                             │
        ┌───────────────────────────────┐                   │
        │    Project calibration image   │──608              │
        └───────────────────────────────┘                   │
                        └────────────────────────────────────┘
```

# FIG. 6

Start

Project calibration image — 701

Set initial exposure — 702

Is |average luminance – target value| within error range? — 704

No

Yes

End

Is average luminance lower than target value? — 706

No

Yes

Exposure value = (exposure value + minimum exposure value)/2 — 708

Exposure value = (exposure value + maximum exposure value)/2 — 710

F I G. 7

Exposure settable range

#1

#2

#3

F I G. 8

Start

Project calibration image —901

Set initial WB —902

Is |representative WB − target WB| within error range? —904

No

Yes

End

Is representative WB lower than target WB? —906

No

Yes

WB value = (WB value + minimum WB value)/2 —908

WB value = (WB value + maximum WB value)/2 —910

F I G. 9

White balance settable range

#1

#2

#3

FIG. 10

Luminance

←—i$_d$=v

←—i$_d$=0

Position

FIG. 12

Project grid

FIG. 11A

Detect grid from
camera image

FIG. 11B

Improve precision
of grid position

FIG. 11C

Create distortion
correction map from
difference of position

FIG. 11D

Correct distortion
of each frame

FIG. 11E

Camera image    After color correction    Projector projection image

Incomparable due to
difference of color

Comparable if colors
match

**FIG. 13A**

Camera image    Projector projection image    After color correction

Incomparable due to
difference of color

Comparable if colors
match

**FIG. 13B**

Add luminance
of entire image

Local adaptive
luminance addition

Local/luminance
adaptive luminance
addition

Dark portion

Brightness increases
regardless of whether
or not dark portion is

Add luminance only
around shadow tip

Add luminance only
in dark portion
around shadow tip

**FIG.14A    FIG.14B    FIG.14C    FIG.14D**

Tool bar

Display content

Display content

Projector
projectable
range

System status
indication

Projector
projectable range

**FIG.15A    FIG.15B    FIG.15C    FIG.15D**

Before operation starts

Scroll mode

Cursor position indication

Hand
shadow

Relative shift
amount indication

Scroll start-point
position indication

Cursor position
indication

Scroll holding
range indication

**FIG.16A                    FIG.16B**

Before operation starts

FIG. 17A

Zoom mode

Start-point
indication

Initial scale indication

Relative scale
indication

FIG. 17B

FIG. 18

FIG. 19A

FIG. 19B

FIG. 19C

FIG. 20A

FIG. 20B

FIG. 20C

FIG. 21A

FIG. 21B

FIG. 22A

FIG. 22B

FIG. 23A

FIG. 23B

Fingertip locus

FIG. 24

Periodic motion

Set matching between application and gesture type

Application: XXX
PDF: YYY
Electronic teaching material: ZZZ

Screen feedback

Cursor position, type of finger shape, etc.

Active Application information

Issue GUI operation event

Browser

PDF viewer

Electronic teaching material

Click, scroll, etc.

Number of fingertips/ position/shape

UI controller

| | One finger | Two finger | One finger per each hand (multi-touch) |
|---|---|---|---|
| Presentation | Next | Previous | — |
| Browser | Click | Scroll | Zoom |
| PDF | Marker | Scroll | Zoom |
| Electronic teaching material | Click | Scroll | Zoom |

F I G. 2 5

FIG. 26A

FIG. 26B

FIG. 26C

Non-touch state

FIG. 27A

Non-touch state

FIG. 28A

Touch

FIG. 27B

Touch

FIG. 28B

Screen deformation
caused by touch

FIG. 27C

Sound is generated
due to touch

FIG. 28C

Cursor shift

FIG. 29A

Output confirmation operation
using remote controller

Press

FIG. 29B

Detection range =
operation target range

FIG.30A

Operation target range

Detection range

FIG.30B

$I_c$    $I_m$

Laser bright spot is brighter than projected content
$I_c - I_m > \theta$ diff

FIG.31

FIG.32

Support portion of pointing bar
does not generate shadow

Shadow of leading
end of pointing bar

Pointing bar

FIG.33

EP 2 802 147 A2

Camera image

Corrected camera image

Image used in correction

Correction of projected content

Calibration

Content drawn on whiteboard

Projector projectable range

System creates camera image by canceling background color

Content drawn on whiteboard, used to internally cancel background color

Information based on content drawn on whiteboard, used to cancel background color in practice

F I G. 3 4 A

F I G. 3 4 B

F I G. 3 4 C

F I G. 3 4 D

Camera image

Portions other than projection content
= "background"
(part of screen/room)

Projection content

**F I G. 3 5**

Start

Store background ~ 3702

Calculate average of motion vectors of stored background and current background ~ 3704

Is average of motion vectors equal to or greater than threshold value? ~ 3706

No

Yes

Perform calibration regarding position again ~ 3708

**F I G. 3 6**

Start

Store background ~ 3802

Calculate average of luminance difference between stored background and current background ~ 3804

Is average of luminance difference equal to or greater than threshold value? ~ 3806

No

Yes

Perform calibration of luminance again ~ 3808

F I G. 3 7

ML            MR

F I G. 3 8

F I G. 4 0 A            F I G. 4 0 B

F I G. 3 9